# FASCICULE DE BREVET EUROPEEN

(11) **EP 3 039 353 B1**
(45) Date de publication et mention de la délivrance du brevet: **08.11.2017**
(21) Numéro de dépôt: 14786638.8
(22) Date de dépôt: 07.10.2014
(51) Int. Cl.: F24F 13/22, F24F 3/153, F24F 11/00

(54) **SYSTEME ET PROCEDE DE TRAITEMENT ET DE CONDITIONNEMENT D'AIR**
SYSTEM UND VERFAHREN ZUR LÜFTUNG UND KLIMATISIERUNG
SYSTEM AND METHOD FOR AIR HANDLING AND AIR CONDITIONING

(30) Priorité: 09.10.2013 FR 1359815
(43) Date de publication de la demande: 06.07.2016
(73) Titulaire: Commissariat à l'Énergie Atomique et aux Énergies Alternatives, 75015 Paris (FR)
(72) Inventeur: MARIOTTO, Mathieu, 38190 Villard-Bonnot (FR); COLASSON, Stéphane, F-38340 Voreppe (FR)
(74) Mandataire: Brevalex
(86) Numéro de dépôt international: PCT/EP2014/071380
(87) Numéro de publication internationale: WO 2015/052151

(56) Documents cités:
- EP-A1- 2 244 023
- EP-A2- 2 498 013
- WO-A1-2007/095985
- WO-A1-2010/102627
- WO-A1-2011/133027
- WO-A1-2013/021147

## Description

L'invention se rapporte au domaine des systèmes et des procédés de traitement et de conditionnement d'air, par exemple pour des bâtiments exposés à des climats chauds et humides du type de ceux rencontrés dans le sud-est asiatique. Néanmoins, d'autres applications sont possibles. Par exemple, l'invention peut aussi s'appliquer à des volumes d'air mis en jeu dans des applications industrielles et comprenant des problèmes de séchage d'air, tels que dans l'industrie papetière, agro-alimentaire ou micro-électronique.

L'invention concerne plus précisément de tels systèmes équipés d'échangeurs à double flux d'air, du type permettant un transfert thermique ainsi qu'un transfert d'humidité / de vapeur d'eau entre les deux flux d'air traversant l'échangeur. Un tel échangeur assurant ce double transfert est également couramment dénommé « échangeur total » ou « échangeur enthalpique ».

L'invention s'applique donc au traitement et au conditionnement d'air pour bâtiments, de préférence de l'habitat ou du tertiaire. L'échangeur garantit ainsi non seulement un transfert thermique entre le flux d'air vicié et le flux d'air extérieur, mais également un transfert de vapeur d'eau entre ces deux flux, du milieu le plus humide vers le milieu le plus sec.

Dans les climats chauds et humides, le flux d'air extérieur, également dénommé flux d'air neuf, peut présenter une température élevée, par exemple aux alentours de 30 à 35°C, et une forte humidité relative, par exemple aux alentours de 90 à 95%. Dans ces conditions, le transfert de vapeur d'eau a donc lieu du flux d'air extérieur vers le flux d'air vicié. Néanmoins, lorsque l'humidité relative du flux d'air extérieur est très élevée, il existe un risque de condensation au sein de l'échangeur, qui est préjudiciable à son bon fonctionnement, sa fiabilité et à la sécurité sanitaire du procédé. En effet, même si le transfert de vapeur d'eau entre les deux flux traversant l'échangeur contribue à la diminution de l'humidité absolue du flux d'air extérieur, l'humidité relative transfert de vapeur d'eau entre les deux flux traversant l'échangeur contribue à la diminution de l'humidité absolue du flux d'air extérieur, l'humidité relative est par ailleurs augmentée par le refroidissement de ce même flux d'air extérieur dans l'échangeur. A cet égard, il est rappelé que l'humidité absolue correspond à la concentration de vapeur d'eau par kilogramme d'air sec, tandis que l'humidité relative correspond au rapport de la pression partielle de vapeur sur la pression de vapeur saturante (pression à partir de laquelle l'air ne peut plus contenir davantage de vapeur, sinon celle-ci se condense).

Dans l'art antérieur, il existe plusieurs solutions mettant en oeuvre des échangeurs enthalpiques, qui peuvent par exemple être implantés en amont d'un groupe frigorifique à compression de vapeur. A titre indicatif, ces solutions sont des alternatives à l'emploi de roues dessicantes également connues de l'art antérieur, mais appartenant à un domaine éloigné de celui de l'invention.

Pour ce qui concerne les solutions à échangeurs enthalpiques, connues notamment du document WO2011133027, peu d'entre elles résolvent le problème de risque de condensation à l'intérieur de l'échangeur. Une solution est néanmoins proposée dans le document EP 2 498 013, qui divulgue la possibilité de court-circuiter l'échangeur enthalpique en cas de flux d'air extérieur présentant une humidité relative trop élevée. Cependant, en refusant son passage à travers l'échangeur, le système subit une perte conséquente de rendement, puisque l'énergie associée au flux d'air vicié reste inutilisée.

Aussi, il existe un besoin d'optimisation de ces systèmes de traitement et de conditionnement d'air à échangeurs enthalpiques, notamment pour faire face aux risques de condensation du flux d'air extérieur très humide.

Pour répondre à ce problème, l'invention a tout d'abord pour objet un système de traitement et de conditionnement d'air comprenant au moins un module d'échangeur enthalpique à double flux d'air permettant un transfert thermique et un transfert de vapeur d'eau entre deux flux d'air, respectivement constitués par un premier flux d'air et un second flux d'air présentant une température et une humidité absolue inférieures à celles du premier flux d'air.

Selon l'invention, le système comporte en outre :
- des moyens permettant de déterminer l'humidité relative du premier flux d'air à l'entrée dudit module d'échangeur enthalpique ; et
- des moyens de contrôle configurés pour ordonner un apport de chaleur au premier flux d'air avant son entrée dans ledit module d'échangeur enthalpique, lorsque son humidité relative excède une valeur prédéterminée.
- un groupe frigorifique à compression de vapeur équipé d'un évaporateur et d'un condenseur destinés à être traversés par le premier flux d'air après sa sortie dudit module échangeur enthalpique, et le système est conçu de manière à ce que ledit apport de chaleur provienne dudit groupe calorifique, et de préférence d'une partie d'un liquide frigorigène traversant ce groupe.

L'invention présente ainsi l'originalité de réchauffer, le cas échéant, le premier flux d'air qui se trouverait dans un état trop proche de la courbe de saturation. Il est donc astucieusement procédé à une élévation de la température du flux d'air le plus chaud. Par une simple élévation de sa température, ce premier flux d'air voit son humidité relative diminuer, et devient alors moins sujet au risque de condensation dans le module d'échangeur. Cette solution est avantageuse d'une part en ce qu'elle évite de court-circuiter l'échangeur comme cela est proposé dans l'art antérieur, et d'autre part en ce que l'apport de chaleur, requis pour le maintien du flux d'air à une humidité relative inférieure à une valeur prédéterminée, peut être faible.

Alternativement, l'apport de chaleur pourrait provenir de la chaleur dégagée par ledit condenseur du groupe frigorifique en fonctionnement. L'apport de chaleur s'effectuerait alors à partir d'un fluide de refroidissement du condenseur, ce fluide étant habituellement de l'air.

D'autres solutions sont envisageables pour fournir cet apport de chaleur, de préférence issues des énergies renouvelables. Typiquement, il peut s'agir de capteurs solaires, ou encore d'éléments résistifs. Les solutions décrites ci-dessus visant à prélever de l'énergie au niveau du groupe frigorifique est particulièrement avantageuse en ce qu'elle permet de récupérer tout ou partie des énergies fatales du cycle thermodynamique au sein d'un tel groupe frigorifique.

De préférence, le système comprend un échangeur secondaire conçu pour assurer ledit apport de chaleur au premier flux d'air, de préférence un flux d'air extérieur.

Pour la réalisation de cet échangeur secondaire, toute technologie peut être envisagée en fonction du fluide utilisé, à savoir liquide, gazeux ou un mélange des deux, et en fonction du type d'énergie, à savoir sensible, latente ou à effet joule. Dans un mode de réalisation envisagé, l'échangeur secondaire est traversé par ledit premier flux d'air et par une partie du fluide frigorigène qui circule dans le groupe, ce fluide échauffé en sortie du compresseur permettant en effet d'amener les calories nécessaires au premier flux d'air. Néanmoins, sans sortir du cadre de l'invention, il peut être envisagé toute autre façon d'extraire la chaleur dégagée au sein du groupe frigorifique, pour l'amener en direction du premier flux d'air à réchauffer.

De préférence, le système comprend une pluralité de modules d'échangeur enthalpique agencés en série et traversés successivement par ledit premier flux d'air et ledit second flux d'air.

De préférence, le système est alors conçu de sorte que la détermination de l'humidité relative puisse s'effectuer pour au moins un module d'échangeur enthalpique, et que le premier flux d'air puisse être réchauffé au moins avant son entrée dans l'un desdits modules d'échangeur enthalpique.

Encore plus préférentiellement, lesdits moyens de contrôle sont conçus pour ordonner un apport de chaleur au premier flux d'air avant son entrée dans chacun desdits modules d'échangeur enthalpique, pour lesquels l'humidité relative déterminée à l'entrée du module excède une valeur prédéterminée.

Dans ce cas de figure, l'humidité relative est donc déterminée à l'entrée de chacun des modules constituant ensemble l'échangeur enthalpique. L'apport de chaleur est donc contrôlé individuellement module par module, par comparaison avec la valeur prédéterminée qui est préférentiellement identique pour tous les modules de l'échangeur, mais qui pourrait néanmoins différer en fonction des modules.

D'autres alternatives sont possibles et couvertes par la présente invention. Par exemple, la détermination de l'humidité relative pourrait ne s'effectuer que pour un nombre n restreint de modules, supérieur ou égal à un, tandis que l'apport de chaleur pourrait s'appliquer à l'entrée d'un nombre m de modules supérieur ou égal au nombre n. A titre d'exemple, à partir de la seule détermination de l'humidité relative du premier flux d'air à l'entrée du premier module d'échangeur enthalpique, il pourrait être ordonné l'apport de chaleur à l'entrée d'un ou plusieurs des modules constituant l'échangeur enthalpique.

Dans tous les cas, l'apport de chaleur peut être régulé, par exemple stoppé seulement lorsque l'humidité relative atteint la valeur prédéterminée, ou bien l'ordre peut simplement entraîner l'apport d'une quantité déterminée de chaleur, éventuellement fonction de la valeur d'humidité relative déterminée.

Dans tous les cas, le fait de multiplier les modules d'échangeur, et de réchauffer le flux d'air extérieur successivement à son entrée dans différents modules d'échangeurs, contribue à rationaliser l'utilisation de chaleur apportée au flux d'air extérieur et à augmenter la valeur maximale d'humidité relative tolérée au sein des modules. A cet égard, il est noté qu'avec des conditions d'entrée généralement variables dans les différents modules, la configuration en cascade permet un ajustement plus fin des quantités de chaleur à utiliser, une marge de sécurité minimale étant à prendre en compte, d'où la notion de rationalisation de l'énergie utilisée. Cela contraste avec la configuration à module unique où il faudrait utiliser une marge de sécurité plus importante pour pouvoir s'adapter à tous les cas possibles.

Dans ce système qui permet d'utiliser l'énergie de manière rationnelle tout en évitant des occurrences pernicieuses de condensation dans l'échangeur enthalpique, il est préférentiellement prévu de faire circuler le flux d'air extérieur et le flux d'air vicié à contre-courant dans le module d'échangeur enthalpique. Même si une solution à co-courant est envisageable, celle à contre-courant est préférée pour une utilisation encore plus rationnelle de l'énergie prélevée pour réchauffer le flux d'air extérieur.

De préférence, chaque module d'échangeur enthalpique est un module de type membrane imper-respirante, c'est-à-dire étanche à l'eau liquide et à l'air et perméable à la vapeur d'eau, qu'il soit de conception à plaques, tubulaire ou autre.

De préférence, le système comprend plusieurs modules d'échangeur enthalpique agencés successivement selon une direction d'empilement, deux modules quelconques directement consécutifs présentant une zone de contact de part et d'autre de laquelle sont respectivement agencées deux chambres intermédiaires de passage des flux d'air, chacune en partie délimitée par une sortie de flux d'air de l'un des deux modules et une entrée de flux d'air de l'autre des deux modules.

De préférence, le système de traitement et de conditionnement d'air est préférentiellement destiné à fournir de l'air frais à l'intérieur d'un volume, de préférence un bâtiment, ledit premier flux d'air est un flux d'air destiné à être introduit dans le volume, de préférence un flux d'air extérieur, et le second flux d'air est un flux d'air provenant de l'intérieur dudit volume, correspondant à un flux d'air vicié dans le cas où le volume est un bâtiment.

L'invention a également pour objet un procédé de traitement et de conditionnement d'air, le procédé étant mis en oeuvre à l'aide d'un système tel que décrit ci-dessus et comportant une étape visant à déterminer l'humidité relative du premier flux d'air à l'entrée dudit module d'échangeur enthalpique, puis, lorsque l'humidité relative excède une valeur prédéterminée, une étape visant à ordonner un apport de chaleur au premier flux d'air avant son entrée dans ledit module d'échangeur enthalpique.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique d'un système de traitement et de conditionnement d'air selon un mode de réalisation préféré de l'invention ;
- la figure 2 représente une vue similaire à celle de la figure 1, sur laquelle l'échangeur enthalpique présente une conception différente à plusieurs modules ;
- la figure 3 représente un diagramme schématisant la logique de commande assurée par les moyens de contrôle équipant le système de traitement et de conditionnement d'air montré sur la figure 2 ;
- la figure 4 est une vue schématique semblable à celle de la figure 1, sur laquelle l'échangeur enthalpique comprend quatre modules placés en série ;
- la figure 5 représente un diagramme psychrométrique sur lequel des références alphabétiques ont été portées, ces références correspondant à celles indiquées sur la vue de la figure 4 ; et
- la figure 6 représente une vue plus détaillée en perspective d'un mode de réalisation d'un échangeur enthalpique, destiné à équiper un système de traitement et de conditionnement d'air selon l'invention.

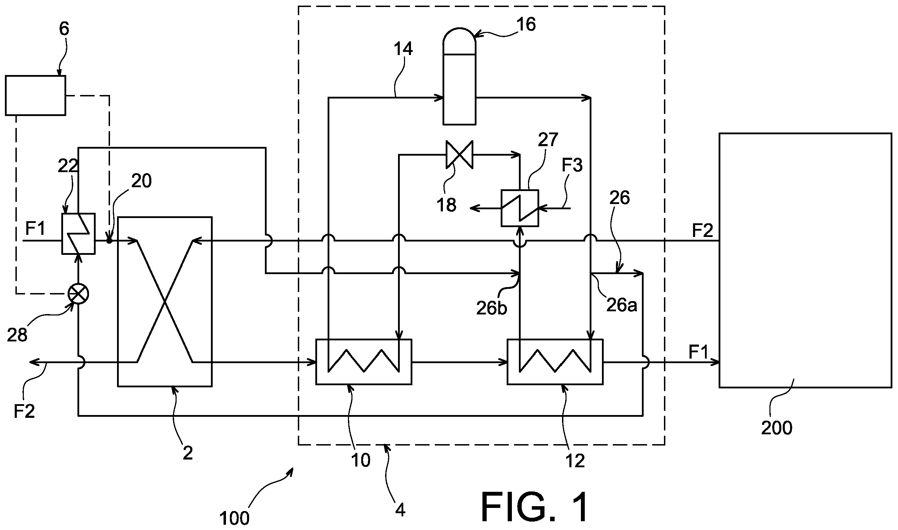

Tout d'abord en référence à la figure 1, il est montré un système de traitement et de conditionnement d'air 100, destiné à fournir de l'air frais à l'intérieur d'un bâtiment 200, de préférence destiné à être exposé à un climat chaud et humide, tel que celui rencontré dans le sud-est asiatique. Le système 100 comprend tout d'abord un échangeur enthalpique 2 ainsi qu'un groupe frigorifique à compression de vapeur 4, interposé entre cet échangeur 2 et le bâtiment 200. Des moyens de contrôle sont associés à l'échangeur enthalpique 2, et éventuellement aussi au groupe frigorifique à compression de vapeur 4.

L'échangeur enthalpique 2 est du type conventionnel, à savoir qu'il est destiné à être traversé avantageusement à contre-courant par un premier flux d'air extérieur F1 et un second flux d'air vicié F2 provenant de l'intérieur du bâtiment 200, et présentant une température et une humidité absolue plus faibles que celles du premier flux d'air extérieur F1.

Ici, l'échangeur 2 garantit donc un transfert thermique entre le flux d'air vicié F2 et le flux d'air extérieur F1. En d'autres termes, l'échangeur est prévu pour utiliser la fraîcheur contenue dans le flux d'air vicié F2 afin de refroidir le flux d'air extérieur chaud F1. Il est bien entendu noté que pour transférer de la chaleur sensible depuis le flux F1 vers le flux F2 plus froid, la conséquence est un abaissement de la température du flux d'air chaud F1 provenant de l'extérieur

Parallèlement, l'échangeur enthalpique 2 est prévu pour transférer une partie de la vapeur d'eau contenue dans le flux d'air extérieur F1 vers le flux d'air vicié F2 présentant une concentration de vapeur d'eau par kilogramme d'air sec (humidité absolue) plus faible lorsqu'il sort du bâtiment 200.

Dans ce mode de fonctionnement du système 100, correspondant à un mode de refroidissement du bâtiment 200, le flux d'air extérieur F1 sortant de l'échangeur enthalpique 2 traverse successivement l'évaporateur 10 et le condenseur 12 du groupe frigorifique à compression de vapeur 4. De manière classique et connue de l'homme du métier, ce groupe 4 comprend un fluide réfrigérant/frigorigène 14 qui circule successivement dans un compresseur 16, le condenseur 12, un détendeur 18 et l'évaporateur 10, avant d'être réacheminé vers le compresseur 16.

Le flux d'air extérieur F1 traverse d'abord l'évaporateur 10 pour être refroidi, saturé en humidité, condensé et pour atteindre le niveau d'humidité absolue adéquate pour le traitement d'air, avant de traverser le condenseur 12 pour y subir une augmentation de température s'accompagnant d'une baisse d'humidité relative, son humidité absolue restant constante. Cela permet d'amener le flux d'air extérieur F1 dans de bonnes conditions d'humidité et de température à l'intérieur du bâtiment 200.

Toujours en référence à la figure 1, il est noté que l'une des particularités de l'invention réside dans le fait que le système comporte en outre des moyens 20 permettant de déterminer l'humidité relative du flux d'air extérieur F1 à l'entrée de l'échangeur 2. Ces moyens peuvent être de toute conception réputée appropriée par l'homme du métier, tel qu'un capteur d'humidité. En fonction de cette détermination qui est communiquée aux moyens de contrôle 6, ces derniers sont configurés pour ordonner un apport de chaleur au flux d'air extérieur F1 avant son entrée dans l'échangeur enthalpique 2, lorsque cette valeur d'humidité relative déterminée excède une valeur prédéterminée.

La valeur seuil prédéterminée d'humidité relative à partir de laquelle un apport d'énergie sensible est activé, peut être définie en se basant sur les données de dimensionnement de l'échangeur enthalpique et sur la connaissance de l'efficacité enthalpique de ce dernier. Cette efficacité enthalpique est dépendante des conditions de fonctionnement, des données géométriques de l'échangeur et de la technologie employée. Ainsi, dans le cas d'un échangeur à membrane imper-respirante, elle dépend des propriétés physiques de ladite membrane, spécifiquement celles liées au transfert de vapeur d'eau, telles que le coefficient de diffusion fickienne, la prise d'eau maximum de la membrane, et la constante de sorption.

En procédant de la sorte, il est possible d'augmenter la température du flux d'air extérieur F1 avant son entrée dans l'échangeur 2, de manière à y limiter les risques de condensation néfastes à son bon fonctionnement.

Dans le mode de réalisation préféré représenté sur la figure 1, l'apport de chaleur provient du liquide frigorigène dont une partie est dérivée après sa sortie du compresseur 16. Pour établir cette dérivation, il est prévu un circuit 26 avec un piquage 26a en amont du condenseur 12 permettant à une partie du fluide frigorigène 14 d'être acheminée jusqu'à l'entrée d'un échangeur secondaire 22. A la sortie de cet échangeur 22, le liquide frigorigène est réacheminé par le circuit 26 jusqu'à un second piquage 26b en aval du condenseur 12, pour sa réintroduction dans le groupe frigorifique 4.

L'échangeur secondaire 22 est donc traversé d'une part par le flux d'air extérieur F1, et d'autre part par une partie du fluide frigorigène 14 prélevée en aval du compresseur 16. Le débit du fluide frigorigène traversant le circuit 26 est contrôlé par une vanne 28, commandée par les moyens 6. Naturellement, toute conception réputée appropriée peut être envisagée pour l'échangeur secondaire 22, par exemple du type échangeur tube à ailettes.

Il est noté que dans le cas où l'énergie prélevée en direction de l'échangeur secondaire 22 ne permet pas d'atteindre les conditions thermodynamiques adéquates avant la détente du fluide dans le détenteur 18, il est prévu, en amont de celui-ci, un aérotherme 27 formant condenseur d'appoint. Cet aérotherme 27 est donc destiné à être traversé d'une part par le fluide frigorigène 14 après sa sortie du condenseur 12, et d'autre part par un flux d'air extérieur F3.

La quantité de chaleur apportée à l'échangeur secondaire 22 peut être régulée, par exemple stoppée seulement lorsque la valeur d'humidité relative du flux F1 déterminée par le capteur 20 atteint la valeur prédéterminée, qui peut être éventuellement saisie par un opérateur en fonction des besoins rencontrés. Cette valeur peut également tenir compte de la conception de l'échangeur, suivant sa sensibilité à des flux d'air humides vis-à-vis des risques de condensation. Il est noté que cette sensibilité est liée en grande partie à l'efficacité de transfert de vapeur d'eau à travers la membrane.

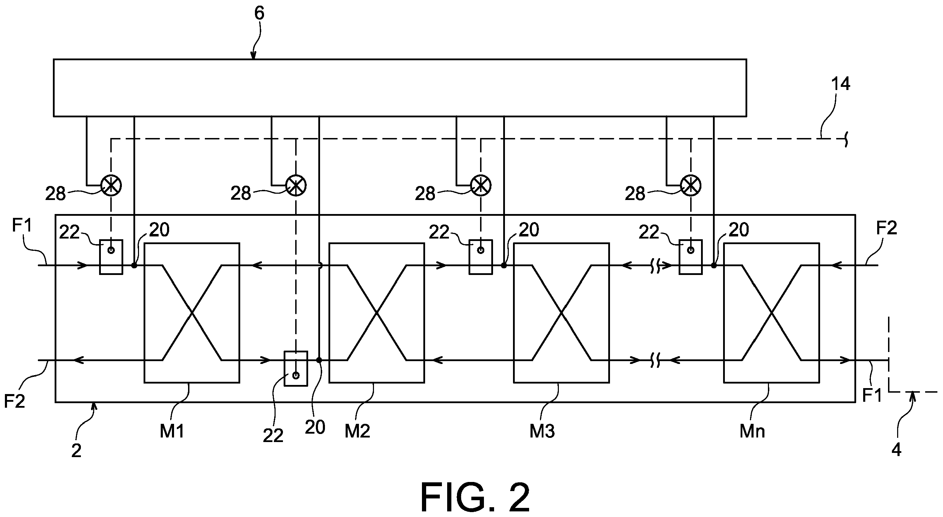

En référence à présent à la figure 2, il est montré une alternative de réalisation dans laquelle l'échangeur enthalpique 2 est réalisé par une pluralité de modules d'échangeur enthalpiques M1, M2,.. Mi,... , Mn, ces modules étant agencés en série et traversés successivement par le flux d'air extérieur F1 et le flux d'air vicié F2 circulant toujours à contre-courant dans chacun des modules. Dans cet exemple, un échangeur secondaire 22 est associé à chaque module, présent en amont de l'entrée du flux d'air extérieur F1. Ces échangeurs sont contrôlés par les moyens 6 via les vannes 28, de même qu'ils sont chacun associés à un capteur d'humidité relative 20 délivrant les valeurs déterminées à ces mêmes moyens 6.

L'avantage d'une telle configuration réside dans le fait de pouvoir apporter de la chaleur au flux d'air extérieur F1 avant son entrée dans chaque module, c'est-à-dire à opérer des apports de chaleur successifs avant le passage dans chaque module.

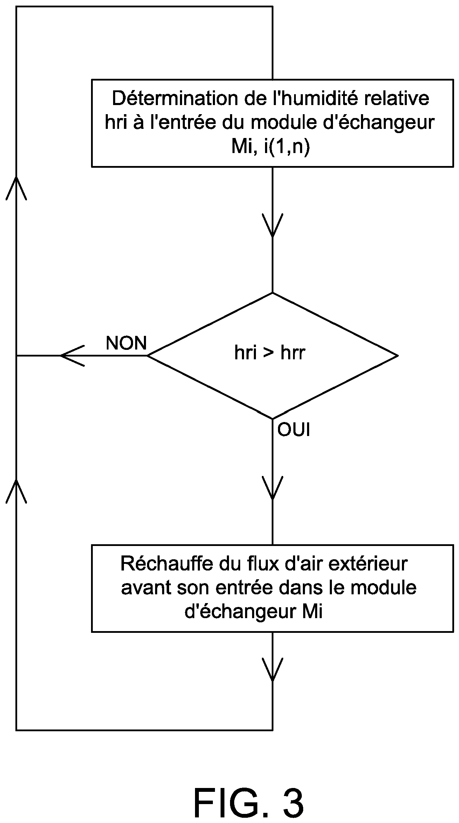

Comme cela a été schématisé sur la figure 3 montrant la logique de commande associée à chacun des modules d'échangeur, il est par exemple fait en sorte, pour chaque module Mi, de procéder à la détermination de l'humidité relative hri à l'entrée du module d'échangeur Mi concerné, à l'aide du capteur 20. Si cette valeur hri est supérieure à une valeur d'humidité relative de référence hrr correspondant à la valeur prédéterminée mentionnée ci-dessus, alors il est opéré une réchauffe du flux d'air extérieur F1, par l'échangeur secondaire associé 22. Cela s'effectue par commande de la vanne 28 assurant la circulation du fluide frigorigène 14 dans l'échangeur secondaire 22. Dans le cas contraire où la valeur hri reste inférieure à la valeur hrr, aucune opération n'est entreprise, c'est-à-dire que le flux d'air extérieur F1 n'est pas réchauffé avant d'être introduit dans le module suivant.

La valeur d'humidité relative de référence hrr peut être la même au niveau de chaque module d'échangeur Mi, ou bien peut être différente. A titre d'exemple indicatif, cette valeur est préférentiellement la même pour tous les modules d'échangeur, lorsque ces derniers présentent une conception identique ou similaire.

Avec cette manière d'opérer, il est possible de conserver en permanence le flux d'air extérieur F1 avec une humidité relative inférieure à l'humidité relative de référence hrr considérée comme critique pour les modules d'échangeur enthalpique, en délivrant simplement des apports de chaleur successifs, de faible quantité énergétique.

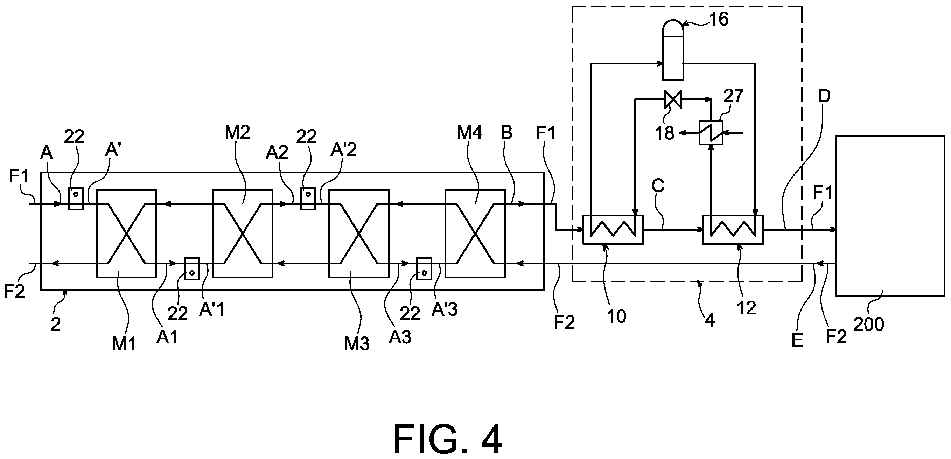

Le mode de réalisation de la figure 4 est similaire à celui présenté sur la figure 2, en ce qu'il présente un échangeur enthalpique 2 à plusieurs modules successifs M1, M2, M3, M4 agencés en série.

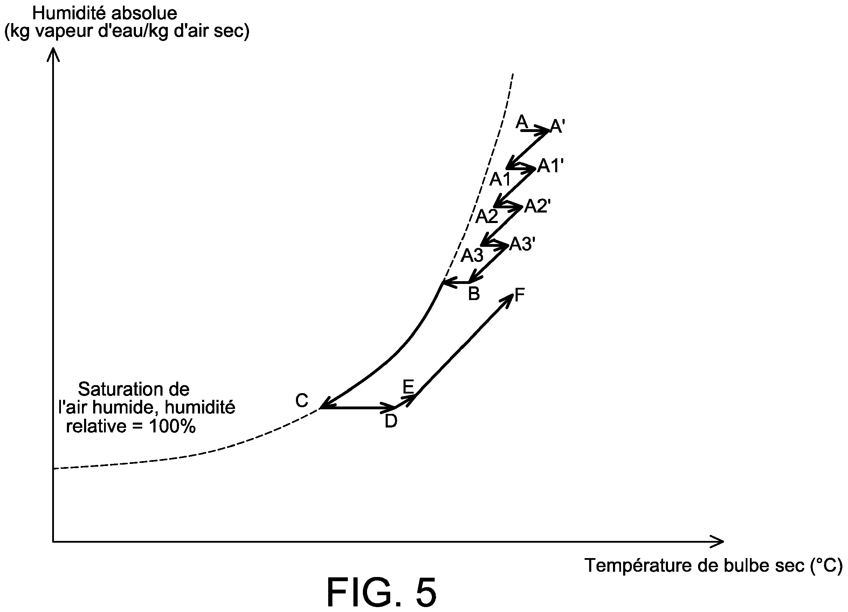

Sur cette figure 4, il a été identifié plusieurs points de référence du flux d'air vicié F2 et du flux d'air extérieur F1, à différents emplacements le long de leurs parcours entre l'échangeur enthalpique 2 et le bâtiment 200. Ces mêmes références ont été portées sur le diagramme psychrométrique de la figure 5, renseignant sur l'état de l'air à chacun de ces emplacements.

Aussi, en référence conjointement aux figures 4 et 5, il est indiqué que le flux d'air extérieur F1 au point A, correspondant à l'entrée de l'échangeur 2, présente une température et une humidité relative élevées, traduisant les conditions climatiques chaudes et humides de l'air extérieur.

Avant d'être introduit dans le premier module M1, le flux F1 est échauffé par l'échangeur secondaire 22 lorsque son humidité relative dépasse l'humidité relative de référence. Cet échauffement est traduit par la ligne AA' sur le diagramme, le point A' correspondant à l'entrée du premier module d'échangeur M1. Au sein de ce module, le flux F1 est refroidi et perd également de son humidité absolue, ce qui le pousse à se rapprocher de la courbe de saturation représentée en pointillés sur la figure 5. Le point A1 montre l'état du flux d'air F1 à la sortie du premier module M1, avant son entrée dans le second module M2, et avant son éventuel réchauffement préalable à son introduction dans ce même module M2. D'une manière analogue à celle décrite ci-dessus, le flux d'air F1 est ici à nouveau réchauffé avant son entrée dans le second module M2, en un point A'1 à partir duquel il pénètre dans ce second module M2 pour y être refroidi et déchargé d'une partie de son humidité, jusqu'à sortir au point A2 auquel il est dans un état le plaçant proche de sa courbe de saturation, comme cela est montré sur la figure 5. Des phénomènes analogues sont observés avant et pendant le passage de ce flux F1 à travers le troisième module M3 et le quatrième module M4, ce qui explique le diagramme en zigzag / cascade entre les points A et B, correspondant respectivement aux points d'entrée du flux F1 dans l'échangeur enthalpique 2, et au point de sortie de ce même flux F1 de l'échangeur.

Lorsque le flux F1 est extrait de cet échangeur 2, il traverse donc l'évaporateur 10 jusqu'à un point C, ce passage conduisant tout d'abord à une baisse de température amenant le flux F1 à sa courbe de saturation, qu'il suit jusqu'à atteindre sa température minimale au point C auquel il présente également le niveau d'humidité absolue souhaité. Ensuite, le passage du flux F1 à travers le condenseur 12 provoque son échauffement à la température souhaitée pour entrer dans le bâtiment 200, ainsi que son positionnement à un taux d'humidité relative correspondant également aux besoins souhaités pour le volume d'air à conditionner (par rapport aux spécifications du confort thermique).

A titre d'exemple indicatif, avec ce mode de fonctionnement, l'air extérieur peut se présenter à une température de 35°C et à une humidité relative de 90% avant d'entrer dans l'échangeur enthalpique 2, tandis que le flux d'air vicié sortant du bâtiment 200 au point E peut présenter une température de l'ordre de 22°C et une humidité relative d'environ 50%. Aussi, sur le diagramme psychrométrique de la figure 5, le segment de droite entre les points D et E peut symboliser l'évolution de l'air durant son passage dans le bâtiment 200, avec une augmentation de sa température ainsi qu'une augmentation de son taux d'humidité absolue. Ces valeurs attachées au flux d'air vicié F2 continuent à augmenter entre les points E et F, correspondant au passage de ce flux F2 à travers l'échangeur enthalpique 2, à contre-courant avec le flux d'air extérieur F1.

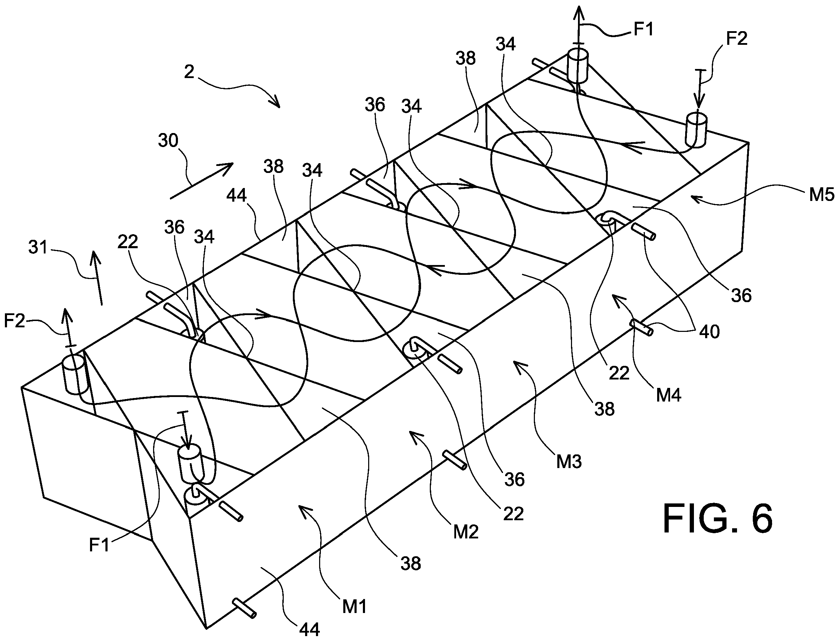

En référence à présent à la figure 6, il est montré un exemple de réalisation d'un échangeur enthalpique 2 de conception astucieuse, et comprenant 5 modules placés en série, référencés M1 à M5. Comme dans les autres modes de réalisation décrits ci-dessus, les modules d'échangeur M1 à M5 présentent une conception à plaques et membranes imper-respirantes, connue de l'homme du métier. De tels échangeurs sont par exemple décrits dans le document FR 2 965 897.

Cette conception repose en effet sur l'empilement de plaques selon une direction 31 orthogonale à une direction 30 selon laquelle les modules se succèdent. Dans ce mode de réalisation, les modules sont au contact deux à deux selon la direction de leur empilement 30. Aussi, deux modules directement consécutifs définissent ensemble, au niveau de leur partie médiane, une zone de contact 34 de part et d'autre de laquelle sont agencées deux chambres intermédiaires de passage de flux d'air. Il s'agit tout d'abord d'une chambre intermédiaire de passage du flux d'air F1, référencée 36, et également d'une chambre intermédiaire de passage du flux d'air F2, référencée 38.

Comme cela est visible sur la figure 6, les chambres 36 sont agencées en quinconces les unes par rapport aux autres, de même que les chambres 38 sont aussi agencées en quinconces les unes par rapport aux autres. Chaque chambre 36 loge un échangeur secondaire 22, qui présente des conduits 40 d'amenée et d'évacuation du fluide frigorigène, qui traverse l'échangeur 2 pour aller en direction du condenseur équipant le groupe frigorifique du système. Ici, chaque module d'échangeur enthalpique présente une forme générale de prisme droit à base hexagonale ou à base en forme de losange. Par conséquent, chaque chambre intermédiaire 36, 38 présente une forme générale de section triangulaire, un côté du triangle étant défini par une entrée de flux d'air de l'un des modules, un autre côté du triangle étant défini par une sortie de flux d'air de l'autre des modules, et le troisième côté correspondant à un capotage 44 cheminant le long de l'échangeur latéralement selon la direction 30. De préférence, plusieurs capotages 44 sont formés par une même et unique plaque.

Par ailleurs, bien que cela n'ait pas été représenté, des capotages supérieur et inférieur viennent également recouvrir les modules M1 à M5, permettant notamment de rendre indépendantes les chambres intermédiaires 36, 38 les unes par rapport aux autres.

Bien entendu, diverses modifications peuvent être apportées par l'homme du métier à l'invention qui vient d'être décrite, uniquement à titre d'exemples non limitatifs. En particulier, l'application décrite ci-dessus concerne l'alimentation en air frais d'un bâtiment quelconque, mais l'invention peut plus généralement s'appliquer à l'alimentation de volumes d'air à traiter dans le domaine des procédés industriels, tels que la papèterie, l'agro-alimentaire ou la micro-électronique.

## Revendications

1. Système (100) de traitement et de conditionnement d'air comprenant au moins un module d'échangeur enthalpique (Mi) à double flux d'air permettant un transfert thermique et un transfert de vapeur d'eau entre deux flux d'air, respectivement constitués par un premier flux d'air (F1) et un second flux d'air (F2) présentant une température et une humidité absolue inférieures à celles du premier flux, le système comportant:
- des moyens (20) permettant de déterminer l'humidité relative (hri) du premier flux d'air (F1) à l'entrée dudit module d'échangeur enthalpique (Mi) ; et
- des moyens de contrôle (6) configurés pour ordonner un apport de chaleur au premier flux d'air (F1) avant son entrée dans ledit module d'échangeur enthalpique, lorsque son humidité relative (hri) excède une valeur prédéterminée (hrr) ; **caractérisé en ce que** le système comporte en outre:
- un groupe frigorifique (4) à compression de vapeur équipé d'un évaporateur (10) et d'un condenseur (12) destinés à être traversés par le premier flux d'air (F1) après sa sortie dudit module échangeur enthalpique (Mi), et **en ce que** le système est conçu de manière à ce que ledit apport de chaleur provienne dudit groupe calorifique (4), et de préférence d'une partie d'un liquide frigorigène traversant ce groupe.

2. Système de traitement et de conditionnement d'air selon la revendication 1, **caractérisé en ce qu'**il comprend un échangeur secondaire (22) conçu pour assurer ledit apport de chaleur au premier flux d'air (F1).

3. Système de traitement et de conditionnement d'air selon l'une quelconque des revendications précédentes, **caractérisé en ce qu'**il comprend une pluralité de modules d'échangeur enthalpique (M1, M2, Mi, Mn) agencés en série et traversés successivement par ledit premier flux d'air (F1) et ledit second flux d'air (F2).

4. Système de traitement et de conditionnement d'air selon la revendication précédente, **caractérisé en ce que** le système est conçu de sorte que la détermination de l'humidité relative puisse s'effectuer pour au moins un module d'échangeur enthalpique (M1, M2, Mi, Mn), et que le premier flux d'air (F1) puisse être réchauffé au moins avant son entrée dans l'un desdits modules d'échangeur enthalpique.

5. Système de traitement et de conditionnement d'air selon la revendication 3 ou 4, **caractérisé en ce que** lesdits moyens de contrôle (6) sont configurés pour ordonner un apport de chaleur au premier flux d'air (F1) avant son entrée dans chacun desdits modules d'échangeur enthalpique (M1, M2, Mi, Mn), pour lesquels l'humidité relative déterminée à l'entrée du module excède une valeur prédéterminée.

6. Système de traitement et de conditionnement d'air selon l'une quelconque des revendications précédentes, **caractérisé en ce qu'**il est conçu de manière à faire circuler le premier flux d'air (F1) et le second flux d'air (F2) à contre-courant dans le module d'échangeur enthalpique.

7. Système de traitement et de conditionnement d'air selon l'une quelconque des revendications précédentes, **caractérisé en ce que** chaque module d'échangeur enthalpique est un module de type membrane imper-respirante.

8. Système de traitement et de conditionnement d'air selon l'une quelconque des revendications précédentes, **caractérisé en ce qu'**il comprend plusieurs modules d'échangeur enthalpique (M1, M2, Mi, Mn) agencés successivement selon une direction d'empilement (30), deux modules quelconques directement consécutifs présentant une zone de contact (34) de part et d'autre de laquelle sont respectivement agencées deux chambres intermédiaires de passage des flux d'air (36, 38), chacune en partie délimitée par une sortie de flux d'air de l'un des deux modules et une entrée de flux d'air de l'autre des deux modules.

9. Système de traitement et de conditionnement d'air selon l'une quelconque des revendications précédentes, **caractérisé en ce qu'**il est préférentiellement destiné à fournir de l'air frais à l'intérieur d'un volume, de préférence un bâtiment (200), **en ce que** ledit premier flux d'air (F1) est un flux d'air destiné à être introduit dans le volume, de préférence un flux d'air extérieur, et **en ce que** le second flux d'air (F2) est un flux d'air provenant de l'intérieur dudit volume, correspondant à un flux d'air vicié dans le cas où le volume est un bâtiment.

10. Procédé de traitement et de conditionnement d'air, le procédé étant mis en oeuvre à l'aide d'un système (100) selon l'une quelconque des revendications précédentes, et comportant une étape visant à déterminer l'humidité relative (hri) du premier flux d'air (F1) à l'entrée dudit module d'échangeur enthalpique (Mi), puis, lorsque l'humidité relative (hri) excède une valeur prédéterminée (hrr), une étape visant à ordonner un apport de chaleur au premier flux d'air (F1) avant son entrée dans ledit module d'échangeur enthalpique (Mi).

## Patentansprüche

1. System (100) zur Behandlung und zur Konditionierung von Luft, umfassend wenigstens ein Enthalpietauschermodul (Mi) mit doppeltem Luftstrom, das einen Wärmetransfer und einen Wasserdampftransfer zwischen zwei Luftströmen ermöglicht, die durch einen ersten Luftstrom (F1) bzw. einen zweiten Luftstrom (F2) gebildet sind, der eine Temperatur und eine absolute Feuchtigkeit kleiner als jene des ersten Stroms aufweist,
wobei das System umfasst:
- Mittel (20), die die Bestimmung der relativen Feuchtigkeit (hri) des ersten Luftstroms (F1) am Eingang des Enthalpietauschermoduls (Mi) ermöglichen; und,
- Steuermittel (6), die dazu ausgelegt sind, eine Zufuhr von Wärme zum ersten Luftstrom (F1) vor seinem Eintritt in das Enthalpietauschermodul zu veranlassen, wenn seine relative Feuchtigkeit (hri) einen vorbestimmten Wert (hrr) überschreitet;
**dadurch gekennzeichnet, dass** das System ferner umfasst:
- eine Dampfkompressionskühlgruppe (4), die mit einem Verdampfer (10) und einem Kondensator (12) ausgestattet ist, die dazu ausgelegt sind, von dem ersten Luftstrom (F1) nach seinem Austritt aus dem Enthalpietauschermodul (Mi) durchsetzt zu werden, und dass das System derart ausgelegt ist, dass die Zufuhr von Wärme von der Kühlgruppe (4) kommt, und vorzugsweise von einem Teil einer Kälteflüssigkeit, die diese Gruppe durchsetzt.

2. System zur Behandlung und zur Konditionierung von Luft nach Anspruch 1, **dadurch gekennzeichnet, dass** es einen Sekundärtauscher (22) umfasst, der dazu ausgelegt ist, die Zufuhr von Wärme zum ersten Luftstrom (F1) sicherzustellen.

3. System zur Behandlung und zur Konditionierung von Luft nach einem der vorhergehenden Ansprüche, **dadurch gekennzeichnet, dass** es eine Mehrzahl von Enthalpietauschermodulen (M1, M2, Mi, Mn) umfasst, die in Reihe angeordnet sind und nacheinander von dem ersten Luftstrom (F1) und dem zweiten Luftstrom (F2) durchsetzt werden.

4. System zur Behandlung und zur Konditionierung von Luft nach dem vorhergehenden Anspruch, **dadurch gekennzeichnet, dass** das System derart ausgelegt ist, dass die Bestimmung der relativen Feuchtigkeit für wenigstens ein Enthalpietauschermodul (M1, M2, Mi, Mn) durchgeführt werden kann, und dass der erste Luftstrom (F1) wenigstens vor seinem Eintritt in eines der Enthalpietauschermodule aufgeheizt werden kann.

5. System zur Behandlung und zur Konditionierung von Luft nach Anspruch 3 oder 4, **dadurch gekennzeichnet, dass** die Steuermittel (6) dazu ausgelegt sind, eine Zufuhr von Wärme zum ersten Luftstrom (F1) vor seinem Eintritt in jedes der Enthalpietauschermodule (M1, M2, Mi, Mn) zu veranlassen, für die die am Eingang des Moduls bestimmte relative Feuchtigkeit einen vorbestimmten Wert überschreitet.

6. System zur Behandlung und zur Konditionierung von Luft nach einem der vorhergehenden Ansprüche, **dadurch gekennzeichnet, dass** es derart ausgelegt ist, dass es den ersten Luftstrom (F1) und den zweiten Luftstrom (F2) im Gegenstrom in dem Enthalpietauschermodul zirkulieren lässt.

7. System zur Behandlung und zur Konditionierung von Luft nach einem der vorhergehenden Ansprüche, **dadurch gekennzeichnet, dass** jedes Enthalpietauschermodul ein Modul vom Typ atmungsaktive Membran ist.

8. System zur Behandlung und zur Konditionierung von Luft nach einem der vorhergehenden Ansprüche, **dadurch gekennzeichnet, dass** es mehrere Enthalpietauschermodul (M1, M2, Mi, Mn) umfasst, die nacheinander entlang einer Stapelungsrichtung (30) angeordnet sind, wobei zwei beliebige direkt aufeinanderfolgende Module eine Kontaktzone (34) aufweisen, auf deren beiden Seiten zwei jeweilige Zwischenkammern zur Luftstrompassage (36, 38) angeordnet sind, wobei jede teilweise begrenzt ist durch einen Luftstromausgang des einen der zwei Module und einen Luftstromeingang des anderen der zwei Module.

9. System zur Behandlung und zur Konditionierung von Luft nach einem der vorhergehenden Ansprüche, **dadurch gekennzeichnet, dass** es vorzugsweise dazu ausgelegt ist, Frischluft in das Innere eines Volumens zu liefern, vorzugsweise eines Gebäudes (200), dass der erste Luftstrom (F1) ein Luftstrom ist, der dazu ausgelegt ist, in das Volumen eingeleitet zu werden, vorzugsweise ein Außenluftstrom, und dass der zweite Luftstrom (F2) ein Luftstrom ist, der aus dem Inneren des Volumens stammt, entsprechend einem Abluftstrom in dem Fall, in dem das Volumen ein Gebäude ist.

10. Verfahren zur Behandlung und zur Konditionierung von Luft, wobei das Verfahren mit Hilfe eines Systems (100) nach einem der vorhergehenden Ansprüche durchgeführt wird und einen Schritt zur Bestimmung der relativen Feuchtigkeit (hri) des ersten Luftstroms (F1) am Eingang des Enthalpietauschermoduls (Mi) umfasst, und dann, wenn die relative Feuchtigkeit (hri) einen vorbestimmten Wert (hrr) überschreitet, einen Schritt zur Veranlassung einer Zufuhr von Wärme zum ersten Luftstrom (F1) vor seinem Eintritt in das Enthalpietauschermodul (Mi).

## Claims

1. A system (100) for air handling and air conditioning comprising at least one enthalpy exchanger module (Mi) with a dual airflow enabling a heat transfer and a water vapour transfer between two airflows, respectively made of a first airflow (F1) and a second airflow (F2) having a temperature and an absolute humidity lower than those of the first flow,
**characterized in that** the system further includes:
- means (20) for determining the relative humidity (hri) of the first airflow (F1) at the inlet of said enthalpy exchanger module (Mi); and
- control means (6) configured to command a heat supply to the first airflow (F1) before it enters said enthalpy exchanger module, when the relative humidity (hri) exceeds a predetermined value (hrr);
- a vapour compression refrigerating unit (4) fitted with an evaporator (10) and a condenser (12) through which the first airflow (F1) is intended to pass after it leaves said enthalpy exchanger module (Mi), and **in that** the system is designed so that said heat supply comes from said heating unit (4), and preferably from part of a refrigerant fluid passing through this unit.

2. The system for air handling and air conditioning according to claim 1, **characterized in that** it comprises a secondary exchanger (22) designed to provide said heat supply to the first airflow (F1).

3. The system for air handling and air conditioning according to any of the preceding claims, **characterized in that** it comprises a plurality of enthalpy exchanger modules (M1, M2, Mi, Mn) arranged in series and through which said first airflow (F1) and said second airflow (F2) successively pass.

4. The system for air handling and air conditioning according to the preceding claim, **characterized in that** the system is designed so that determining the relative humidity can be performed for at least one enthalpy exchanger module (M1, M2, Mi, Mn), and so that the first airflow (F1) can be heated at least before it enters one of said enthalpy exchanger modules.

5. The system for air handling and air conditioning according to claim 3 or 4, **characterized in that** said control means (6) are configured to command a heat supply to the first airflow (F1) before it enters each of said enthalpy exchanger modules (M1, M2, Mi, Mn), for which the relative humidity determined at the inlet of the module exceeds a predetermined value.

6. The system for air handling and air conditioning according to any of the preceding claims, **characterized in that** it is designed so as to circulate the first airflow (F1) and the second airflow (F2) countercurrently in the enthalpy exchanger module.

7. The system for air handling and air conditioning according to any of the preceding claims, **characterized in that** each enthalpy exchanger module is a module of the waterproof-breathable membrane type.

8. The system for air handling and air conditioning according to any of the preceding claims, **characterized in that** it comprises several enthalpy exchanger modules (M1, M2, Mi, Mn) successively arranged along a stacking direction (30), any two directly consecutive modules having a contact area (34) on either side of which two intermediate passage chambers of the airflows (36, 38) are respectively arranged, each being partly delimited by an airflow outlet of one of both modules and an airflow inlet of the other of both modules.

9. The system for air handling and air conditioning according to any of the preceding claims, **characterized in that** it is preferentially intended to supply cool air inside a volume, preferably a building (200), **in that** said first airflow (F1) is an airflow intended to be introduced into the volume, preferably an outside airflow, and **in that** the second airflow (F2) is an airflow coming from the inside of said volume, corresponding to a foul airflow in the case where the volume is a building.

10. A method for air handling and air conditioning, the method being implemented using a system (100) according to any of the preceding claims, and including a step for determining the relative humidity (hri) of the first airflow (F1) at the inlet of said enthalpy exchanger module (Mi), and then, when the relative humidity (hri) exceeds a predetermined value (hrr), a step for commanding a heat supply to the first airflow (F1) before it enters said enthalpy exchanger module (Mi).
